# EUROPEAN PATENT APPLICATION

(11) **EP 3 922 685 A1**
(43) Date of publication of application: **15.12.2021**
(21) Application number: 20179513.5
(22) Date of filing: 11.06.2020
(51) Int. Cl.: C09D 5/18

(54) **COATINGS**

(71) Applicant: Jotun A/S, 3202 Sandefjord (NO)
(72) Inventor: VEE, Ingrid, 3126 Tønsberg (NO)
(74) Representative: Dehns

(57) **Abstract**

An intumescent coating composition comprising:
(i) at least one epoxy binder;
(ii) at least one support free silane; and
(iii) at least one curing agent.

## Description

This invention relates to an intumescent coating composition comprising an epoxy binder, a curing agent for the binder and at least one silane. The intumescent coating composition has an excellent toughness by which is meant a balance of mechanical strength and flexibility whilst maintaining suitable char forming and insulation properties required of a intumescent coating composition. The invention also relates to a process for the preparation of such an intumescent coating as well as applying that coating to a substrate. The invention also relates to substrates coated with a cured intumescent coating.

### Background of Invention

Steel is commonly used as a construction material and has many advantages. However, structural steel is known to quickly lose its structural integrity in the case of a fire if unprotected. It is, therefore, known to protect steel using some form of passive fire protection, of which intumescent coatings are a known variant. Passive fire protection is designed to slow the rate at which the structural steel increases in temperature, significantly delaying the time to any form of structural collapse giving time to evacuate personnel and preserve expensive assets.

An intumescent coating is defined as a coating that swells in the case of a fire to produce a carbon based insulating char and has many advantages over other available forms of passive fire protection, such as their light weight and environmental durability.

An important application area for intumescent coatings is the oil and gas industry. As Oil and Gas and HPI processing facilities can be located in geographically diverse locations it is essential that the intumescent coating that protect such facilities possess the correct combination of toughness and intumescent char forming characteristics.

The market for intumescent coatings is changing, with oil and gas exploration moving towards colder areas. Designing an intumescent coating for cold climates such as the arctic is challenging. The coating is exposed to very low temperatures and also large temperature fluctuations. The steel is also subject to these fluctuations of temperature and will also expand and contract placing more stress on any coating.

Most materials will expand as the temperature increases, and contract when the temperature decreases. As an example, if structural steel is expanding and contracting at a different rate than the intumescent coating, it may induce stress which may cause failure of the coating. It is therefore important to develop new intumescent coatings that can withstand these challenges. The coatings industry therefore sees an increased demand for intumescent coatings with improved toughness.

Intumescent coatings developed for hydrocarbon fires are traditionally based on cured bisphenol-A and epichlorohydrin based epoxy-amine resins. Such epoxy based resins provide several benefits, for example, these coatings provide good environmental barrier protection and react to heat to evolve intumescent chars suitable to protect from the harshest fire scenarios. However, such coatings are known to be relatively brittle and prone to cracking and debonding induced from the stresses commonly observed from excessive bending, flexing and twisting movements that will typically occur if the coating and the underlaying substrate is subjected to large temperature fluctuations. It is therefore a need to develop intumescent coatings with improved toughness that can withstand these variations.

Intumescent coatings are known in the literature. US2019/0100662 describes intumescent coating compositions comprising particular expansion agents with good foam char.

WO2016/170122 describes an intumescent coating with enhanced fire retardant properties comprising an epoxy binder, an epoxy reactive diluent, and a curing agent. In particular, an acid catalyst is used which is effective to form a phosphoric acid on thermal decomposition in combination with a specific curing agent. The curing agent comprises a mixture of polyamide, polyether amine and an amine functional monomer.

CN103265870 discloses an intumescent coating for aviation with flame retardant, carbon donor, expansion agent, acid generating compound, epoxy resin, and silane. Silane levels are low (and its purpose undefined) and the composition does not contain a curing agent.

WO2013/062295 describes an intumescent coating composition comprising epoxy resin, curing agent, intumescent components and graphite coated with silane. The composition reduces the emission of harmful gases from the coating in the event of a fire. The silane in the present invention comprises functional groups that react with other components of the binder system during the curing process. The silane functionality however is free to interact with the other components in the coating such as the pigments, fillers and fibers improving the cohesive strength and flexibility within the coating film. This is imperative to the improved toughness of the coating film. The silane should therefore not be adhered to a support such as graphite. The silane-functionality in '295 is coated onto a graphite carrier and is therefore not able to interact with the other components in the coating films.

It has been discovered that by combining an epoxy binder, a curing agent for that binder, and a silane, preferably in combination with a reactive diluent and/or an hydrocarbon resin provides an intumescent coating with ideal toughness while still maintaining the ability to form a suitable char with the required insulation properties during a fire. The defined intumescent coating compositions have the ability to operate over a wide temperature range, such as a range of 50 °C or more.

### Summary of Invention

Thus, viewed from one aspect the invention provides an intumescent coating composition comprising:
(i) at least one epoxy binder;
(ii) at least one support free silane; and
(iii) at least one curing agent.

Viewed from one aspect the invention provides an intumescent coating composition comprising:
(i) at least one epoxy binder;
(ii) at least one silane;
(iii) at least one hydrocarbon resin; and
(iv) at least one curing agent.

Viewed from one aspect the invention provides an intumescent coating composition comprising:
(i) at least one epoxy binder;
(ii) at least one silane;
(iii) at least one reactive diluent; and
(iv) at least one curing agent.

Viewed from one aspect the invention provides an intumescent coating composition comprising:
(i) at least one epoxy binder;
(ii) at least one silane;
(iii) at least one hydrocarbon resin;
(iv) at least one reactive diluent; and
(v) at least one curing agent.

Viewed from another aspect the invention provides an intumescent coating composition comprising:
(i) 5.0 to 60 wt% of at least one epoxy binder;
(ii) 0.1 to 15 wt% of at least one support free silane;
(iii) 0 to 20 wt% of at least one hydrocarbon resin;
(iv) 0 to 15 wt% at least one reactive diluent; and
(v) at least one curing agent.

Viewed from another aspect the invention provides an intumescent coating composition comprising:
(i) at least one epoxy binder;
(ii) at least one support free silane; and
(iii) at least one curing agent;
(vi) optionally at least one hydrocarbon resin;
(iv) optionally at least one reactive diluent;
(v) an acid-generating compound;
(vi) an expansion agent; and
(vii) optionally a carbon donor compound.

Viewed from another aspect the invention provides an intumescent coating composition comprising:
(i) 5.0 to 60 wt% of at least one epoxy binder;
(ii) 0.1 to 15 wt% of at least one silane;
(iii) 0 to 20 wt% of at least one hydrocarbon resin;
(iv) 0 to 15 wt% at least one reactive diluent; and
(v) at least one curing agent;
(vi) 10 to 50 wt% an acid-generating compound;
(vii) 0.5 to 10 wt% an expansion agent; and
(viii) 0 to 20 wt% a carbon donor compound.

Viewed from another aspect the invention provides an intumescent coating composition comprising:
(i) 5.0 to 60 wt% of at least one epoxy binder;
(ii) 0.1 to 15 wt% of at least one silane;
(iii) 0 to 20 wt% of at least one hydrocarbon resin;
(iv) 0 to 15 wt% at least one reactive diluent;
(v) 0 to 10 wt% at least one flame retardant;
(vi) at least one curing agent;
(vii) 10 to 50 wt% an acid-generating compound;
(viii) 0.5 to 10 wt% an expansion agent; and
(ix) 0 to 20 wt% a carbon donor compound.

Viewed from another aspect the invention provides a kit of parts suitable for the formation of an intumescent coating composition comprising:
a component (A) comprising at least one epoxy binder; and
a component (B) comprising at least one curing agent;
wherein at least one of components (A) or (B) comprises at least one silane
Viewed from another aspect the invention provides a kit of parts suitable for the formation of an intumescent coating composition comprising:
a component (A) comprising at least one epoxy binder; and
a component (B) comprising at least one curing agent;
wherein at least one of components (A) or (B) comprises at least one hydrocarbon resin and wherein at least one of components (A) or (B) comprises at least one silane; or
wherein at least one of components (A) or (B) comprises at least one reactive diluent and wherein at least one of components (A) or (B) comprises at least one silane; or
wherein at least one of components (A) or (B) comprises at least one reactive diluent, wherein at least one of components (A) or (B) comprises at least one silane and wherein at least one of components (A) or (B) comprises at least one hydrocarbon resin.

Intumescent coating components of the intumescent coating composition may be present in component A or component B or in both of the components.

Viewed from another aspect the invention provides a substrate coated with an intumescent coating composition as herein before defined.

Viewed from another aspect the invention provides a substrate coated with an intumescent coating composition as herein before defined which has been cured.

Viewed from another aspect the invention provides a process for the preparation of an intumescent coating composition as herein before defined comprising blending components (A) and (B) as herein defined.

Viewed from another aspect the invention provides use of an intumescent coating composition as hereinbefore defined to coat a substrate, which substrate is subjected to a temperature range of at least of 50°C during operation.

Viewed from another aspect the invention provides a process for the application of an intumescent coating composition to a substrate comprising applying an intumescent coating composition as herein before defined to a substrate, e.g. by airless spraying and allowing said coating to cure.

Viewed from another aspect the invention provides a process for the application of an intumescent coating composition to a substrate comprising applying an intumescent coating composition as herein before defined to a primer layer on a substrate, e.g. by airless spraying and allowing said coating to cure.

Viewed from another aspect the invention provides a process for the application of an intumescent coating composition to a substrate comprising applying an intumescent coating composition as herein before defined directly to a metallic substrate, e.g. by airless spraying and allowing said coating to cure.

In all embodiments it is preferred if the coating composition comprises 0.25 to 15 wt% of at least one reactive diluent.

In all embodiments it is preferred if the coating composition comprises 0.5 to 20 wt% of at least one hydrocarbon resin.

### Definitions

The invention relates to an intumescent coating composition. The term intumescent coating composition is also used to define a composition formed from the combination of the first composition (A) and the second composition (B). To prevent premature curing, the intumescent coating composition of the invention may be supplied in two parts, a first composition (A) comprising the epoxy binder and a second composition (B) comprising the curing agent. The other components of the intumescent coating composition can be present in either component (A) or (B) as long as any component present in component (A) does not react with any other component within component (A) and any component present in component (B) does not react with any other component within component (B).

The toughness of a coating film is defined as a combination of the mechanical strength and the flexibility of the coating film and is used as a parameter to describe a materials resistance to fracture when stressed. The toughness is measured by the T-bar test described in the experimental section.

The binder system is defined as the combination of the binder resin(s), silane and the curing agent. If present, the hydrocarbon resin, the reactive diluent and the flame retardant are also regarded as part of the binder system.

The coating composition also contains components to ensure intumescence. To "intumesce" means to char and expand. When exposed to heat from a fire, for example, components in an intumescent coating chemically react to produce gases and a cellular carbonaceous char that expands into a foam when the gases become trapped within the char. Intumescent coatings thus form a relatively thick and thermally insulative foam barrier on the surfaces of coated substrates exposed to fire and/or relatively high heat.

The term support free silane requires that the silane is not carried on any support such as graphite. The silane-functionality is "free" and hence capable of interacting with the other components in the coating film such as the pigments, filler and fibers improving the cohesive strength and flexibility in the film.

The term expansion agent is used interchangeably with the term blowing agent.

The term acid generating compound might also be called acid catalyst herein.

The term (meth) acrylate encompasses both methacrylate and acrylate.

### Detailed description of Invention

This invention relates to an intumescent coating composition for a substrate such as a metal substrate or a composite material preferably a steel substrate. That steel substrate can be present on any object on which the coating of the invention might be useful. In particular, the substrate is one which is exposed to extremes of weather such as substrates in cold conditions and large temperature variations. The substrate may be subject to temperatures in the range of 60 to -30 °C. More importantly, the substrate may be subjected to a temperature range of 50°C or more in normal usage, e.g. a temperature range of -30 to +40°C.

The substrate may be on an off-shore or on-shore oil and gas facility, wind turbine, chimney, power station or other industrial unit, bridge, crane, and so on.

The intumescent coating composition forms a layer on the substrate. The substrate may be provided with a conventional anti-corrosive primer coating to which the intumescent coating layer adheres. Examples of suitable primer layers are coatings based on epoxy, modified epoxy (such as modified with polyvinyl butyral), polyurethane, acrylic, vinyl and chlorinated rubber. Preferably the primer layer is an epoxy-based primer or a zinc-rich epoxy-based primer. The dry film thickness of the primer is ideally in the range of 15 -500 microns.

The intumescent coating composition may also be applied directly onto the substrate.

In a preferred embodiment the intumescent coating layer is overcoated with a top coat. The topcoat may provide the desired colour to the substrate and enhance the durability of the intumescent coating films. A clear top-coat may also be suitable.

The top coat used for overcoating the intumescent coating composition may be based on polyurethane, polysiloxane, epoxy, alkyd, acrylic, vinyl and chlorinated rubber. Preferably the top coat is polyurethane based. The thickness of the decorative topcoat can vary from 15 microns to 250 microns. Preferably the thickness should be in the range from 25 microns to 75 microns, as too high a thickness of topcoat may inhibit the intumescent reactions.

In another preferred embodiment, the intumescent coating composition is not overcoated and therefore forms the top layer on a substrate. In one embodiment the intumescent coating composition is present as a single layer on a substrate or as a layer over an anticorrosive primer layer.

The intumescent coating compositions is applied in high dry film thickness to ensure a good fire protection. The dry film thickness of the intumescent coating composition is preferably 0.5 - 40 mm. The intumescent coating composition may be applied in several layers to achieve the appropriate dry film thickness.

The intumescent coating composition of the invention is designed to protect substrates to critical core temperatures ranging from 200-700 °C depending on the nature of the substrate, degree of load and particular requirements of the specific structure being protected. The critical core temperature is typically defined as the temperature when a specific substrate has lost load bearing capacity to such a degree that the structure is at immediate risk of a critical collapse.

### Intumescent Coating Composition

The intumescent coating composition comprises a binder system based on at least one epoxy binder, which is cured using at least one curing agent. The intumescent coating composition can also comprise intumescent components and any conventional intumescent coating components such as pigments, fillers and standard additives.

A combination of epoxy binders within the binder system is also possible. The intumescent coating composition is typically supplied in kit form and shortly before application of the intumescent coating composition to a substrate, a first composition comprising the epoxy binder is mixed with a second composition comprising the curing agent to form the intumescent coating composition. After application, that intumescent coating composition then cures on the substrate to form an intumescent coating layer.

Ideally, the binder system comprises at least one liquid epoxy binder. The term liquid refers to the state of the epoxy binder at room temperature and pressure of 23°C, 1 atm.

Preferably the intumescent coating composition has a high solids content and thereby a low content of volatile organic compounds (VOC) present. The intumescent coating composition preferably has a solids content of at least 90 wt%, such as at least 95 wt%, more preferably at least 99 wt%, especially 100 wt.%.

The intumescent coating composition of the invention preferably contains a very low solvent content such as less than 5.0 wt% solvent, especially less than 2.0 wt% solvent, more especially less than 1.0 wt% solvent, e.g. 0.5 wt% or less. Ideally there is no solvent present at all in the intumescent coating composition.

The high solids volume and low solvent content leads to lower VOC content. The VOC content of the intumescent coating composition is preferably less than 250 g/L, more preferably less than 100 g/L, most preferably less than 50 g/L. In some embodiments, the VOC content might be 25 g/L or less, such as 10 g/L or less. In this regard, volatile organic compounds include benzyl alcohol.

The pot life of the coating composition of the invention is preferably at least 1hr, such as 1 to 3 hrs, e.g. 1.5 to 2.5 hrs. By pot life is meant the time after mixing of the first and second components when the intumescent coating composition is still able to be applied to the substrate. Pot lives of less than 30 mins are commercially challenging given the time it takes to coat a large object.

The viscosity of the intumescent coating composition measured just after combination of the two components should be high to ensure the application of thick layers with high amounts of intumescent pigments to ensure good fire protection.

Viscosities may be in the range of 1-30 McP at 50 °C, such as 10 McP for component A and 1.5 McP for component B. The intumescent coating composition of the invention is most especially associated with improved toughness without any reduction in the passive fire protection performance. Toughness is here defined as a combination of the mechanical strength and the flexibility of the material and can be used as a measure of a material's resistance to fracture when stressed. T-bar testing, where a coated steel substrate is exposed to cyclic temperature changes, is widely used by the coatings industry to indicate coating toughness. The intumescent coating composition of the present invention exhibits excellent toughness. In one embodiment, the 1^{st} crack in the T-bar test for a intumescent coating layer of thickness 7 mm occurs after at least 5 days, such as at least 10 days, especially at least 15 days, such as 5 to 40 days.

This improvement in toughness is achieved without any significant loss in passive fire protection performance. In this regard, it will be appreciated that non-intumescent coating compositions offer essentially no passive fire protection as they do not intumesce.

The intumescent coating composition of the invention adheres well to both the substrate or a primer layer on that substrate and offers good water resistance and rapid hardness. The intumescent coating composition also meets environmental cycling standards (e.g. ISO 12944-9 Annex B).

The components of the intumescent coating composition will now be described in more detail. These components can be present in any component of a kit used to make the intumescent coating composition as long as the curing agent is kept separate from any other component of the intumescent coating composition with which it would react in storage.

### Intumescent components of the coating composition.

Intumescent coating compositions of the invention comprise a binder system (comprising at least an epoxy binder, silane and a curing agent) and intumescent coatings components. These include an acid-generating agent which typically thermally decomposes at elevated temperatures (e.g. greater than 200 °C) and produces an acid that reacts with a carbon donor compound to produce a carbonaceous char. The intumescent components also include an expansion agent that decomposes at elevated temperatures (e.g. greater than 200° C) and produces a gas that volumetrically expands the carbonaceous char and produces a carbonaceous foam.

Intumescent coating compositions of the invention can comprise a specific carbon donor compound which functions as a charring agent.

In a preferred embodiment, the intumescent coating composition comprises a specific carbon donor compound as specified below. The binder system comprising at least an epoxy binder, silane and a curing agent can also provide a source of carbon, which, in a fire, is converted into a char.

When intumescent coatings are exposed to fire or heat, and, as a result, the temperature of the intumescent coatings exceeds 200 °C, for example, the acid-generating agent decomposes to provide an acid. The carbon donor compound reacts with the acid to form a carbonaceous char. For example, an ammonium polyphosphate acid-generating agent decomposes at about 240 °C to form ammonia and phosphoric acid. The phosphoric acid can function as an acid for dehydration reactions of organic polyol compounds such as starch, cellulose, non-polymeric sugars (e.g., glucose, fructose, sucrose, and the like), pentaerythritol, dipentaerythritol, or tripentaerythritol, or combinations of any thereof, which function as carbon donor compounds.

The phosphoric acid reacts with the hydroxyl groups to form heat-unstable phosphate esters, which decompose to release carbon dioxide and regenerate the phosphoric acid. The dehydrated carbon donor and/or the binder system forms the carbonaceous char, and the carbon dioxide expands the char into a foam.

The expansion agent likewise decomposes at elevated temperatures (e.g., greater than 200° C.) and produces additional gas that volumetrically expands the carbonaceous char and produces the carbonaceous foam.

It is therefore preferred if the intumescent coating composition of the invention comprises an acid-generating agent, an expansion agent and optionally a carbon donor compound.

### Carbon Donor Compound

The carbon donor compound, if present, can comprise an organic polyhydroxy compound (i.e. an organic polyol) and/or expandable graphite. For example, the carbon donor compound can comprise pentaerythritol, dipentaerythritol, tripentaerythritol, a polysaccharide (e.g., starch, cellulose, glycogen, and the like), a disaccharide sugar (e.g., sucrose, lactose, maltose, and the like), a monosaccharide sugar (glucose, fructose, galactose, and the like), glycerol, or expandable graphite, or a combination of any thereof. It is preferred if the carbon donor compound is not graphite such as expandable graphite. It is preferred if the intumescent coating composition of the invention is free of graphite. Preferably the carbon donor is pentaerythritol or dipentaerythritol.

### Acid Generating compound

The acid-generating compound can comprise a source of phosphoric or sulfonic acid that is capable of producing the phosphoric or sulfonic acid upon exposure to heat, particularly at temperatures greater than 200° C. Examples of such sources include sodium phosphate, potassium phosphate (e.g. potassium tripolyphosphate), ammonium phosphate (e.g. ammonium polyphosphate (APP), monoammonium phosphate, diammonium phosphate), sodium sulfate, potassium sulfate, ammonium sulfate, magnesium sulfate, or para-toluene sulfonic acid, or a combination of any thereof.

In some examples, the acid-generating compound comprises a phosphoric acid ester of a polyhydroxy compound, or an ammonium phosphate (e.g., APP), or an amine phosphate (e.g., melamine phosphate), or a combination of any thereof.

A particularly useful acid-generating compound is ammonium polyphosphate because APP yields phosphoric acid at temperatures generally below the decomposition temperatures of the carbon donor compounds described above. Thus, APP produces phosphoric acid that is readily available to participate in the charring reactions.

APP compounds are polymeric phosphates, having P-O-P linkages, which may be represented by the formula:

[NH₄PO₃]ₙ

wherein the average value of n is at least about 10. Particularly useful APP compounds in the intumescent coating compositions of the present invention include those having values of n>1000.

The acid-generating compound can also comprise boric acid or a source of boric acid that is capable of producing boric acid upon exposure to heat, particularly at temperatures greater than 200° C. The source of boric acid can comprise, for example, borate salts such as ammonium pentaborate, zinc borate, sodium borate, lithium borate, aluminum borate, magnesium borate, borosilicate compounds, and combinations of any thereof.

### Expansion Agent

The intumescent coating composition of the present invention may further comprise an expandable intumescent material (also known as a blowing agent). The blowing agent will produce non-flammable gases, generally nitrogen, when exposed to fire or heat. The produced gases will expand the char derived from the carbon source, forming a foam-like protective layer. Suitable examples of commercially available blowing agents include but are not limited to nitrogen-containing compounds such as glycine, melamine, melamine salts, melamine derivatives, urea, urea derivatives, dicyandiamide, guanidine, and isocyanurate derivatives, especially melamine.

Melamine derivatives include for example melamine formaldehyde, methylolated melamine, hexamethoxymethylmelamine, melamine monophosphate, di-melamine phosphate, melamine biphosphate, melamine polyphosphate, melamine pyrophosphate, melamine cyanurate, melamine borate, melam (N2-(4,6-diamino-1,3,5-triazin-2-yl)-1,3,5-triazine-2,4,6-triamine), melem (2,5,8-triamino-1,3,4,6,7,9,9b-heptaazaphenalene), and melon (poly[8-amino-1,3,4,6,7,9,9b-heptaazaphenalene-2,5-diyl)imino).

Urea derivatives include, for example, N-alkylureas such as methyl urea; N,N'-dialkylureas such as dimethylurea; and N,N,N'-trialkylureas such as timethylurea; guanylurea; guanylurea phosphate; formamide amino urea; guanylurea phosphate; 1,3-diamino urea; biurea; and the like.

Isocyanurate derivatives of interest include tris-(2-hydroxyethyl)isocyanurate (THEIC).

Boron-containing compounds useful as blowing agents in the present invention include, but are not limited to, boric acid, and borates, such as ammonium pentaborate, zinc borate, sodium borate, lithium borate, aluminum borate, magnesium borate, and borosilicate.

The blowing agent may also comprise monomeric or polymeric compounds such as meso-lactide, polylactide, a polysulfone, a polycarbonate, a polyester, a 1,1-di-activated vinyl compound, or an addition polymer of a 1,1-di-activated vinyl compound, or a combination of any thereof.

A physical blowing agent such as expandable graphite and/or gas incorporating expandable microspheres may also be used.

The intumescent coating composition can comprise 0.0 to 20 wt% of the carbon donor compound, such as 3.0 to 20 wt%, preferably 5.0 to 16 wt%, especially 7.0 to 14 wt% of the carbon donor compound based on the total weight of the intumescent coating composition.

The intumescent coating composition can comprise 10 to 50 wt% of an acid-generating agent, preferably 12 to 40 wt%, more especially 15 to 30 wt% based on the total weight of the intumescent coating composition.

The intumescent coating composition can comprise 0.5 to 10 wt% of an expansion agent, preferably 1.0 to 8.0 wt%, more preferably 1.0 to 5.0 wt% based on the total weight of the intumescent coating composition. It is particularly preferred if the intumescent coating composition is free of graphite, especially silane coated graphite.

### Epoxy-based binder system

The epoxy-based binder system comprises the combination of one or more epoxy-based binders, one or more curing agents, the silane and optionally reactive diluents, hydrocarbon resin, co-binders, flame retardant and accelerators.

### Epoxy-based binder

The epoxy-based binder system preferably comprises one or more epoxy-based binders selected from aromatic or aliphatic epoxy-based binders preferably comprising more than one epoxy group per molecule. The epoxy-groups may be in an internal or terminal position on the epoxy-based binder or on a cyclic structure incorporated into the epoxy-based binder. Preferably the epoxy-based binder comprises at least two epoxy group so that a crosslinked network can be formed. It should be understood that the epoxy-based binders of the present invention also encompass binders that have the traditional epoxy backbones but where the epoxy end-groups have been modified with acrylic or methacrylic functional groups that can be cured with the same curing agents as the epoxy-groups.

Suitable aliphatic epoxy-based binders include epoxy and modified epoxy binders selected from cycloaliphatic epoxy such as hydrogenated bisphenol A, hydrogenated bisphenol A novolac and dicyclopentadiene based binders, glycidyl ethers such as polyglycidyl ethers of polyhydric alcohols, epoxy functional acrylic resins or any combinations thereof.

Suitable aromatic epoxy-based binders includes epoxy and modified epoxy binders selected from bisphenol type epoxy-based binders such as bisphenol A, bisphenol F and bisphenol S, resorcinol diglycidyl ether (RDGE), novolac type epoxy-based binders such as phenolic novolac type binders (bisphenol A novolac, bisphenol S novolac) and cresol novolac type binder or any combinations thereof. In one preferred embodiment the epoxy-based binder is an aromatic epoxy-based binder. Preferably, the aromatic epoxy-based binder is derived from a combination of a compound comprising a least one epoxide functionality with an aromatic co-reactant comprising at least two hydroxyl groups.

Preferred epoxy binders are bisphenol epoxy binders. Preferred epoxy-based binders are biphenol A and bisphenol F epoxy-based binders or bisphenol A/F epoxy binders.

The epoxy-based binder may be a modified epoxy-based binder. Preferably the epoxy-based binder is modified with fatty acids, polypropylene oxide and/or polyethylene oxide.

The solids content in the epoxy-based binder is preferably more than 70 wt.%, preferably more than 80 wt.%, preferably more than 90, most preferred more than 99 wt.%. In a further preferred embodiment, the epoxy-based binder is solvent free.

Examples of suitable commercially available epoxy-based binders are:
- Bisphenol A type epoxy-based binders: Epikote 828 from Hexion, Araldite GY 250 from Huntsman Advanced Materials,
- Bisphenol F epoxy based binders: Epikote 862 from Hexion, YDF- 170 from Kukdo, GY285 from Huntsman, DE 354 from Dow, BFE-170 from CCP, or KF8100 from Kolon.
- Mixture of bisphenol A and bisphenol F: DER 352 from Dow Chemicals, Epikote 235 from Hexion.

The epoxy-based binder may be either a liquid epoxy-based binder or a solid epoxy-based binder or a combination thereof. It should be understood that "liquid" and "solid" refers to the physical state of the epoxy-based binder at ambient temperature and pressure (25 °C and 1 atm). In one preferred embodiment the epoxy-based binder is a liquid epoxy-based binder.

The liquid epoxy-based binder may have an epoxy equivalent weight (EEW) value of 140 to 1000. It is particularly preferred if the EEW is less than 500 such as 156 to 300, especially 156 to 250.

The viscosity of the liquid epoxy-based binder is preferably 1000 to 20 000 mPa, more preferred 1500 to 15 000 mPas.

The solid epoxy-based binder may have an equivalent epoxy weight (EEW) of 300 to 1000. It is most preferred however if the EEW of the solid epoxy-based binder is in the range of 350 to 750, such as 400 to 700, especially 500 to 670. The use of a solid bisphenol A type epoxy-based binder is most preferred.

If there are both liquid and solid epoxy-based binders present in the epoxy-based binder system, it is preferred if the liquid epoxy-based binder is in excess relative to the solid epoxy-based binder.

The epoxy-based binder is preferably present in 5.0 to 60 wt.% of the intumescent coating composition, such as 5.0 to 40 wt% of the intumescent coating More preferably the epoxy binder is present in an amount of 10 to 30 wt.%, especially 12 to 28 wt% most especially 16 to 25 wt%. If a blend of epoxy binders is used these percentages refer to the total epoxy binder content, i.e. adding the wt% of each one.

In one preferred embodiment the epoxy-based binders include bisphenol A based binders, such as 4,4'-isopropylidenediphenol-epichlorohydrin resins, bisphenol F based binders and/or novolac based binders. Bisphenol A epoxy- based binders will be known to those in the field and have the general structure below.

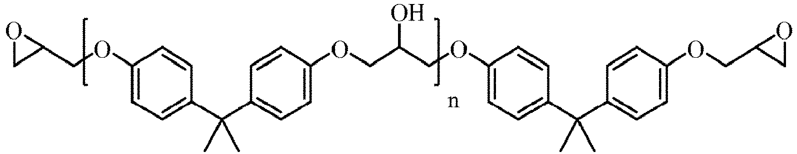

In one preferred embodiment the epoxy-based binder system comprises one or more bisphenol F epoxy-based binders.

The bisphenol F epoxy-based binder may have an EEW value of 100 to 350. However, it is particularly preferred if the EEW is 300 or less such as 100 to 300, especially 150 to 250. Preferably the bisphenol F epoxy-based binder is a liquid.

The Mw of the bisphenol F resin may be more than 170 g/mol. A preferred bipshenol F (4',4'-methylenebisphenol) epoxy-based binder derives from the combination of bisphenol F and epichlorohydrin. The use of a difunctional epoxy-based bisphenol F binders is especially preferred.

A combination of two or more bisphenol F binders might be used. The viscosity of the bisphenol F binders are preferably 1000 to 10 000 mPas, more preferred 2000 to 5000 mPas.

### Curing agent

The epoxy-based binder system also comprises at least one curing agent. The curing agent can be any curing agent commonly known as a curing agent for epoxy-based binder systems. Ideally it is amine based.

To obtain a crosslinked network the curing agent must contain at least two "reactive" hydrogen atoms. "Reactive" hydrogen atom refers to the hydrogen atom that is transferred from the nucleophile to the oxygen atom of the epoxide during the ring opening reaction. The curing agent typically contains at least two curing reactive functional groups.

Examples of suitable curing agents are thiol curing agents, polythiol curing agents, amine curing agents, polyamine curing agents, amine functional polyamide and/or aminofunctional polymer curing agents. The curing agent may also alternatively comprise at least one aminofunctional polysiloxane.

Examples of suitable polythiol curing agents are pentaerythriol tetramercapto propionate. Example of a suitable commercially available polythiol curing agent is GABEPRO^{®} GPM800 from Gabriel performance materials.

In one preferred embodiment the epoxy-based binder system comprises at least one amine functional curing agent. The curing agent typically contains at least two amine groups. The amine groups may be primary or secondary.

Suitable curing agents comprising amines or amino functional polymers are selected from aliphatic amines and polyamines (e.g. cyclo-aliphatic amines and polyamines), amine functional polyamides, polyether amines, polyimidazoles, polyoxy alkylene amines (e.g. polyoxy alkylene diamines), alkylene amines (e.g. alkylene diamines), aralkyl amines, aromatic amines, Mannich bases (e.g. those sold commercially as "phenalkamines"), amino functional silicones or silanes, and including epoxy adducts and derivatives thereof.

In one preferred embodiment the amine functional curing agent comprises a cyclic structure which includes alicyclic amines and modified products of alicyclic amines, preferably polyamines. The term cyclic includes alicyclic, aromatic and heterocyclic polyamines.

In one embodiment adducts of the amine curing agent might also be used. Such adducts can be prepared by reaction of the amine with suitably reactive compounds such as epoxy-binders, epoxy-functional reactive diluent, acrylates, maleates, fumarates, methacrylates or electrophilic vinyl compounds such as acrylonitrile.

Examples of suitable commercially available amine functional curing agents are:
Ancamine 2609, Ancamine 2695, Ancamine 2738, Ancamide 260A, Ancamide 500, Ancamide 506, Ancamide 2386, Ancamine 2759, Ancamine 2760, Ancamine 2712M, Ancamine 1618, Ancamine 2165, Ancamine 2280, Ancamine 2432, Ancamine 2519, Ancamine 2802, Ancamine 2609w, Ancamine 2806 from Evonik, Epikure 3140 from Hexion, GX-483 from Kukdo Chemical, AP5050 from Admark Polycoats, MXDA and Gaskamine 240 from Mitsubishi Gas Chemical Company Inc., Aradur 42 BD and Aradur 943 CH from Huntsman Advanced Materials.

In one particularly preferred embodiment, the curing agent is an aliphatic and/or cycloaliphatic polyamine such as the Ancamine curing agents from Evonik.

In another preferred embodiment the curing agent is an amine functional polyamide curing agent.

It will be appreciated that the curing agent can be supplied neat or in a solvent, ideally the curing agent is solvent free.

One or more curing agents might be used in combination. In one preferred option two or more curing agents are used in combination.

The curing agent should cure the epoxy-based binder at temperatures ranging from 0 to 50 °C. It is preferred if the epoxy-based binder system cures at ambient temperatures.

It is common to quote the equivalent weight of the curing agent in terms of the "active hydrogen equivalent weight". The number of "active hydrogen equivalents" in relation to the one or more curing agents is the sum of the contribution from each of the one or more curing agents. The contribution from each of the one or more curing agents to the active hydrogen equivalents is defined as grams of the curing agent divided by the active hydrogen equivalent weight of the curing agent, where the active hydrogen equivalent weight of the curing agent is determined as: grams of the curing agent equivalent to 1 mol of active hydrogen. For adducts with epoxy resins the contribution of the reactants before adduction is used for the determination of the number of "active hydrogen equivalents" in the complete epoxy-based binder system.

It is also common to quote the number of "epoxy equivalents" in the epoxy-based binders. The "epoxy equivalents" is the sum of the contribution from each of the one or more epoxy-based binders and any other component that contains an epoxy such as a silane or a reactive diluent. The contribution from each of the one or more epoxy-based binders to the epoxy equivalents is defined as grams of the epoxy-based binder divided by the epoxy equivalent weight of the epoxy-based binder, where the epoxy equivalent weight of the epoxy-based binder is determined as: grams of the epoxy resin equivalent to 1 mol of epoxy groups. For adducts with epoxy-based binder the contribution of the reactants before adduction is used for the determination of the number of "epoxy equivalents" in the epoxy-based binder system.

Preferably the ratio between the hydrogen equivalents of the totality of the curing agents and the totality of epoxy equivalents in the epoxy-based binder system of the present invention is in the range of 50: 100 to 120: 100.

Especially preferred epoxy-based binder systems have a ratio between the hydrogen equivalents of the curing agent and the epoxy equivalents of the epoxy resin in the range of 60: 100 to 120: 100 such as 80: 100 to 120: 100, e.g. 90: 100 to 110: 100.

It will be appreciated that the curing agent is shipped separately to the epoxy-based binder and is only mixed with the epoxy-based binder shortly before application. The mixing ratio of the compositions comprising the epoxy-based binder and the curing agent is, of course, governed by the relative amounts of epoxy and active hydrogens present. Ideally, the mixing ratio in solids volume is 1:1 to 10:1, first to second composition, preferably 1:1 to 5:1, most preferred 1:1. The curing agent composition and the epoxy-based binder composition are mixed shortly before application to the substrate.

In one embodiment, the curing agent may be present in the intumescent coating composition in the range of 5 to 25 wt%, such as 10 to 22 wt%.

Whilst a curing accelerator may be used, in one preferred embodiment, the curing agent is employed without the use of a separate accelerator to accelerate the crosslinking process. Some known curing agents are however, combined with an accelerator such as a tertiary amine catalyst and that is also within the scope of the invention.

### Reactive diluents

The epoxy-based binder system preferably further comprises a reactive diluent. The reactive diluent preferably comprises epoxy and/or (meth) acrylic functional groups. The reactive diluent forms part of the binder system and reacts with other components of the binder system during the curing process.

In one preferred embodiment the reactive diluent is an epoxy-functional reactive diluent. The epoxy-functional reactive diluent may be either monofunctional or difunctional.

Examples of such reactive diluents include phenyl glycidyl ether, alkyl glycidyl ether (number of carbon atoms in alkyl group: 1 to 16), glycidyl ester of neodecanoic acid (R¹ R² R³C-COO-Gly, where R¹ R² R³ are alkyl groups such as C8 to C10 alkyl and Gly is a glycidyl group), olefin epoxide (CH₃-(CH₂)n-Gly, wherein n=11 to 13, Gly: glycidyl group), 1,4-butanediol diglycidyl ether (Gly-O-(CH₂)₄-O-Gly), 1,6-hexanediol diglycidyl ether (Gly-O-(CH₂)₆-O-Gly), neopentyl glycol diglycidyl ether (Gly-O-CH₂-C(CH₃)₂-CH₂-O-Gly), trimethylolpropane triglycidyl ether (CH₃-CH₂-C(CH₂-O-Gly)₃), and C1-20- alkylphenyl glycidyl ether (preferably CI-5 alkylphenylglycidyl ether), e.g. methylphenyl glycidyl ether, ethylphenyl glycidyl ether, propylphenyl glycidyl ether and para tertiary butyl phenyl glycidyl ether (p-TBPGE), reaction products of epichlorohydrin and an oil obtained from the shells of cashew nuts.

In one preferred embodiment the epoxy-functional reactive diluent is reaction products of epichlorohydrin and an oil obtained from the shells of cashew nuts, like for example Cardolite NC-513 from Cardolite.

In another particularly preferred embodiment, the epoxy-functional reactive diluents are aliphatic epoxy-functional reactive diluents. The aliphatic epoxy-functional reactive diluents are preferably formed from the reaction of a compound comprising at least one aliphatic epoxide functionality with an aliphatic alcohol or polyol such as 1,6-hexanediol diglycidyl ether or 1 ,4-butanediol diglycidyl ether. Aliphatic glycidyl ethers of chain length 8 to 14 are also preferred. Aliphatic epoxy-functional reactive diluents may contribute to the flexibility of the coating film.

The epoxy equivalent weight (EEW) of the epoxy-functional reactive diluent is preferably 50 to 500, more preferred 100 to 400, most preferred 100 to 300.

The epoxy-functional reactive diluent is different from the epoxy binder. It is preferred if the reactive diluent is of low molecular weight such as less than 500 g/mol. Preferably the viscosity of the epoxy-functional reactive diluent is <100 cp, preferably <50 cP, preferably <35 cp. It is therefore a liquid at 23°C and atmospheric pressure.

In another preferred embodiment the reactive diluent comprises (meth) acrylic functional groups.

The (meth)acrylic functional reactive diluent is preferably an aliphatic (meth)acrylate comprising at least two (meth)acrylate functional groups linked by an organic linker. Such a multiester may be a diester, a triester or a tetraester.

The molecular weight of the (meth)acrylate functional reactive diluent is preferably less than 1000, such as less than 750, especially less than 500 g/mol. Ideally, the (meth)acrylic functional reactive diluent will be the (meth)acrylate ester of a polyol such as a diol, or triol or a sugar based polyol such as a sugar alcohol. It is not essential for all OH groups within a polyol to carry the (meth)acrylate ester group, however there should preferably be at least two ester functionalities in the (meth)acrylic ester. Suitable polyols for functionalization include alkylene diols (e.g. hexanediol, pentanediol), saccharides (e.g. mono or disaccharides) or polyols (especially sugar alcohols) such as erythritol, sorbitol, maltitol and mannitol.

(Meth)acrylic functional reactive diluents of particular interest are of formula 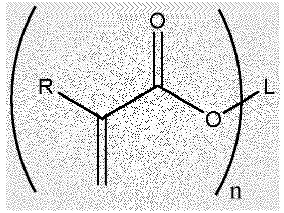
wherein R is H or Me;
n is 2-5; and
L represents the residue of a polyol such as the residue of hexandiol or the residue of a saccharide or sugar alcohol. Thus, at least two OH groups of the polyol carry the acrylate ester shown in the formula above.

L preferably contains only C, H and O atoms. The molecular weight of L is preferably low, such as 1000 g/mol or less.

It is common to quote the number of "acrylate equivalents" in the (meth)acrylic functional reactive diluent. The "acrylate equivalents" is the sum of the contribution from each of the one or more (meth)acrylic functional reactive diluents. The contribution from each of the one or more (meth)acrylic functional reactive diluents to the acrylate equivalents is defined as grams of the (meth)acrylic functional reactive diluent divided by the acrylate equivalent weight of the (meth)acrylic functional reactive diluent, where the acrylate equivalent weight of the (meth)acrylic functional reactive diluent is determined as: grams of the (meth)acrylic functional reactive diluent equivalent to 1 mol of acrylate group. For adducts with curing agents the contribution of the reactants before adduction is used for the determination of the number of "acrylate equivalents" in the complete (meth)acrylic functional reactive diluent system. It is common to include "acrylate equivalents" into the total "epoxy equivalents" when formulating.

A particularly preferred (meth) acrylic reactive diluent is trimethylol propane triacrylate.

The viscosity of the (meth) acrylic functional reactive diluent is preferably less than 300 mPas, more preferably less than 200 mPas, most preferred less than 150 mPas.

A preferred (meth)acrylic functional reactive diluent have an acrylate equivalent weight (AEW) value of 50 - 200, more preferred 70 - 150, most preferred 80 - 125.

Mixtures of (meth)acrylic functional reactive diluents may also be used.

The above reactive diluents can be used singly or in combination of two or more diluents.

The reactive diluent is preferably present in an amount of 0.25 to 15 wt.% preferably 0.5 to 10 wt.%, more preferred 0.5 to 7.0 wt.% of the coating composition, especially 1.0 to 6.0 wt%,more especially 1.0 to 5.0 wt%. If a blend of reactive diluents is used these percentages refer to the total content of reactive diluents, i.e. adding the wt% of each one.

It will be appreciated that as the reactive diluent might react with the curing agent, that it should be kept separate from the curing agent in the kit used to form the intumescent coating composition.
The binder system can comprise the reactive diluent or the hydrocarbon resin or can comprise both reactive diluent and hydrocarbon resin.

### Silane

The coating composition of the invention comprises at least one silane. The silane is part of the binder system and reacts with other components of the binder system during curing. Preferably the silane is a functional silane comprising functional groups that can react with the binder system such as amine, epoxy, acryl, methacryl, thiol and isocyanate groups. Silanes of use in the invention are generally of low Mw such as less than 400 g/mol. Suitable silanes are of general formula (I) or (II)

(I) Y-R_{(4-z)}SiX_{z}

wherein z is an integer from 1 to 3,

(II) Y-R_{(3-y)}R¹SiX_{y}

wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents a halogen group or an alkoxy group.
Y is a functional group bound to R that can react with the epoxy-based binder and/or the curing agent.

Thus, viewed from another aspect the invention provides an intumescent coating composition comprising:
(i) at least one epoxy binder;
(ii) at least one silane of general formula (I) or (II)

   (I) Y-R_{(4-z)}SiX_{z}

   wherein z is an integer from 1 to 3;

   (II) Y-R_{(3-y)}R¹SiX_{y}

   wherein y is an integer from 1 to 2;
   each R is a hydrocarbyl group having 1 to 12 C atoms optionally containing an ether or amino linker,
   R¹ is a hydrocarbyl group having 1 to 12 C atoms;
   each X independently represents a halogen group or an alkoxy group.
   Y is a functional group bound to R that can react with the epoxy-based binder and/or the curing agent; and
(iii) at least one curing agent.

Preferably Y is a isocyanate, epoxy, amino, hydroxy, carboxy, thiol, acrylate, or methacrylate group, more preferred epoxy, amino, acrylate or methacrylate groups, most preferred epoxy or amino group. It is particularly preferred if Y is an epoxy group. The Y group can bind to any part of the chain R. It will be appreciated that where Y represents an epoxy group then R will possess at least two carbon atoms to allow formation of the epoxide ring system.

In one particularly preferred embodiment Y is an amino group or epoxy group. The amino groups are preferably NH₂. Preferably Y is an epoxy group.

If the Y group is an amino group that can react with the epoxy-based binder, it is preferred if the silane is provided separately from the epoxy-based binder together with the curing agent. In general, in the kit of the invention, the silane should not react with any ingredient of the component of the kit in which the silane is present.

Each X independently represents a halogen group or an alkoxy group. It is especially preferred if X is an alkoxy group such as a C1-6 alkoxy group, especially methoxy or ethoxy group. It is also especially preferred if there are two or three alkoxy groups present. Thus z is ideally 2 or 3, especially 3.

Subscript y is preferably 2.

R¹ is preferably CI-4 alkyl such as methyl.

R is a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-Epoxypropoxy)propyl] trimethoxysilane:

H₂COCHCH₂OCH₂CH₂CH₂Si(OCH₃)₃.

R is preferably an unsubstituted (other than Y obviously), unbranched alkyl chain having 2 to 8 C atoms.

A preferred silane general formula is therefore of structure (III)

(III) Y'-R'_{(4-z')}SiX'_{z},

wherein z' is an integer from 2 to 3,
R' is a unsubstituted, unbranched alkyl chain having 2 to 8 C atoms optionally containing an ether or amino linker,
Y' is an amino or epoxy functional group bound to the R' group, and
X' represents an alkoxy group.

Examples of such silanes are the many representatives of the products manufactured by Degussa in Rheinfelden and marketed under the brand name of Dynasylan(R)D, the Silquest(R) silanes manufactured by Momentive, and the GENOSIL(R) silanes manufactured by Wacker.

Specific examples include methacryloxypropyltrimethoxysilane (Dynasylan MEMO, Silquest A- 174NT), 3-mercaptopropyltri(m)ethoxysilane (Dynasylan MTMO or 3201 ; Silquest A- 189), 3-glycidoxypropyltrimethoxysilane (Dynasylan GLYMO, Silquest A- 187), tris(3-trimethoxysilylpropyl) isocyanurate (Silquest Y-11597), gamma-mercaptopropyltrimethoxysilane (Silquest A- 189), beta-(3,4-epoxycyclohexyl)ethyltrimethoxysilane (Silquest A- 186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-l 110), aminopropyltriethoxysilane (Dynasylan AMEO) or N-(2-aminoethyl)-3-aminopropyltrimethoxysilane (Dynasylan DAMO, Silquest A-l 120) or N-(2-aminoethyl)-3-aminopropyltriethoxysilane, triamino-functional trimethoxysilane (Silquest A- 1130), bis(gamma-trimethoxysilylpropyl)amine (Silquest A-l 170), N-ethyl-gamma-aminoisobytyltrimethoxy silane (Silquest A-Link 15), N-phenyl-gamma-aminopropyltrimethoxysilane (Silquest Y-9669), 4-amino-3,3-dimethylbutyltrimethoxysilane (Silquest Y-l 1637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other specific silanes of interest include 3 -Aminopropyltriethoxysilane, 3 - Aminopropyltrimethoxysilane, N-(Aminoethyl)-aminopropyltrimethoxysilane H₂NCH₂CH₂NHCH₂CH₂CH₂Si(OCH₃)₃, 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂ CH₂CH₂Si(OCH₂CH₃)₃, [3-(2,3-Epoxypropoxy)propyl]trimethoxysilane (H₂COCHCH₂OCH₂CH₂CH₂ Si(OCH₃)₃).

The use of silane 3-glycidoxypropyltrimethoxysilane is especially preferred. A mixture of silanes might also be used.

The amount of silane present in the intumescent coating composition may be present in an amount of 0.1 to 15 wt%, preferably 0.25 to 15 wt.% such as 0.5 to 10 wt.%, more preferred 0.5 to 7.0 wt.% of the coating composition, especially 1.0 to 6.0 wt%, more especially 1.0 to 5.0 wt%. In some embodiments, the silane is present in an amount of 1.5 to 4.5 wt% of the intumescent coating composition. If a blend of silanes is used these percentages refer to the total silane content, i.e. adding the wt% of each one.

It will be appreciated that if the silane comprises functional groups that can react with the epoxy binder it should be kept separate from the epoxy binder in the kit used to form the intumescent coating composition.

The functional group Y in the silane react with the binder system of the intumescent coating composition and therefore becomes a part of the cured network in the intumescent coating composition. The other silane-functional groups do not react with the binder system and are free to interact with the other components in the coating and the underlaying substrate thus improving the toughness of the coating film.. For that reason the silane should not be carried on a carrier such as graphite. It should be "free" and added to the intumescent coating composition as compound without carrier.

### Accelerators

The epoxy-based binder system may comprise a curing accelerator. The curing accelerator may be any known curing accelerator for epoxy-based coating systems such as tertiary amines, (meth)acrylic esters, imidazoles, organic acids, phenols and organic phosphines.

Examples of suitable tertiary amines are triethanol amine, dialkylamino ethanol, triethylene diamine, 1,4-diazabicyclo[2.2.2]octane, 1,8-diaza-bicyclo[5.4.0]undec-7-ene and 2,4,6-tris(dimethylaminomethyl)phenol. One particularly preferred accelerator is 2,4,6-tris(dimethylaminomethyl)phenol such as Ancamine K54 from Evonik.

Examples of suitable imidazoles are 2-methylimidazole, 2-phenylimidazole, 2-phenyl-4-methyl imidazole and 2-heptadecylimidazole.

Examples of suitable organic acids are benzoic acid derivatives such as salicylic acid.

Examples of suitable organic phosphines are tributyl phosphine, methyldiphenyl phosphine, triphenyl phosphine, diphenyl phosphine and phenyl phospine.

Examples of suitable phenols are alkyl phenols such as nonylphenol.

Examples of suitable (meth) acrylic esters are the same as described for the (meth) acrylate-functional reactive diluents above.

### Co-binders

Optionally a co-binder may be present in the intumescent coating composition of the invention in addition to the epoxy-based binder. Examples of suitable co-binders are saturated polyester resins, polyvinylacetate, polyvinylbutyrate, copolymers of vinyl acetate, vinyl isobutyl ether, copolymers of vinyl chloride and vinyl isobutyl ether, styrene co-polymers such as styrene/butadiene co-polymers, acrylic resins, hydroxy-acrylate copolymers, fatty acids and cyclized rubbers.

### Hydrocarbon resin

The coating composition of the invention may also comprise a hydrocarbon resin. The term hydrocarbon resin is a term of the art and refers to a group of typically petroleum derived hydrophobic resins although some resins may also be sourced naturally. Preferred hydrocarbon resins of the invention contain C and H atoms only but some may also contain O atoms, e.g. where the -O- content may be 0 to 10.0 wt% such as 0 to 5.0 wt% of the hydrocarbon resin.

Preferably the hydrocarbon resins have a low water solubility such as less than 5 g/L, more preferred 2 g/L, most preferred 1 g/L.

In general, all types of hydrocarbon resin such as solid or liquid pure aromatic and/or aliphatic C5 and C9 hydrocarbon resins, mixtures of C5/C9, aliphatic/aromatic feedstocks and modified type hydrocarbon resins with epoxy or hydroxyl can be utilized. The C5 resins are generally oligomers or polymers formed from aliphatic monomers with five carbons. The C9 resins are generally oligomers or polymers of nine-carbon aromatic monomers. Preferably, the hydrocarbon resin has a molecular weight less than 1000 g/mol and most preferably molecular weight less than 500 g/mol.

Ideally, the hydrocarbon resin is a petroleum resin. The petroleum resin is a polymer that may contain a hydroxyl group, which is formed using, as a main raw material, a fraction produced as a by-product in the petroleum refining, from petrochemical and carbon feedstocks.

Examples of the petroleum resins suitable in the present invention include an aromatic petroleum resin obtained by polymerizing a C9 fraction (e.g. styrene derivatives such as alpha methyl styrene, *o*, *m*, *p*-cresol, indene, methyl indene, cumene, napthalene or vinyltoluene) obtained from a heavy oil that is produced as a by-product by naphtha cracking, an aliphatic petroleum resin obtained by polymerizing a C5 fraction such as 1,3-pentadiene or isoprene, 2-methyl-2-butene, cyclopentadiene, dicyclopentadiene or cyclopentene. Also employable in the invention are a copolymer-based petroleum resin obtained by copolymerizing the C9 fraction and the C5 fraction, an aliphatic petroleum resin wherein a part of a conjugated diene of the C5 fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene.

Mixtures of diaryl and triaryl compounds obtained from reaction of C9 blends under catalytic conditions are also possible to utilize. Into these petroleum resins, hydroxyl groups are introduced.

Of the above petroleum resins, a hydroxyl group-containing aromatic petroleum resin is particularly preferable from the viewpoints of water resistance and seawater resistance. Thus a phenolic hydrocarbon resin is preferred.

Another possibly hydrocarbon resin is a xylene resin synthesized from 1,3-dimethylbenzene and formaldehyde. Also employable are xylene resins modified with phenols such as bifunctional phenol (e.g., phenol, para-t- butylphenol, p-Cumylphenol, o,p-Dicumylphenol).

Another option is a coumarone resin which is a copolymer containing a coumarne constituent unit, an indene constituent unit and/or a styrene constituent unit in its main chain.

The indene-coumarone resin may be modified with phenol at the end, and at least a part of aromatic rings in the coumarone resin may be hydrogenated. Such coumarone resins include a liquid product having a number-average molecular weight Mn of 200 to 300 and a solid product having a number-average molecular weight Mn of 600 to 800, and any one of them may be used singly, or both of them may be used in combination.

In one preferred embodiment, the hydrocarbon resin is a xylene formaldehyde resin such as EPODIL LV5 from Evonik.

Preferably the hydrocarbon resin is a liquid hydrocarbon resin.

The hydrocarbon resin is preferably non-reactive, i.e. it does not react with other components of the intumescent coating composition. It is therefore preferred if the hydrocarbon resin is free of any epoxy groups. These resins can help decrease the viscosity of the binder system resin and reduce surface tension for improved surface wetting. They also add hydrophobic character to the composition which often results in improved water tolerance. They may also improve the flexibility of the coating film. The skilled person is familiar with the concept of hydrocarbon resins.

Most preferred is a hydrocarbon resin with an "O atom" content of 0 to 8.0 wt% such as 0 to 5.0 wt% or a xylene formaldehyde with a OH content <3 wt%.

It is also possible to utilize hydrocarbon resins based on hydrogenation of natural resins such as rosins, e.g. gum rosin, wood rosin and tall oil rosins. Hydrocarbon resins based on esterification of rosin esters can also be employed.

Hydrocarbon resins based on cardanol can also be employed.

Preferably the hydrocarbon resin forms 0.1 to 20 wt% of the coating, preferably 0.5 to 10% by weight, e.g. 0.5-8.0 wt%, especially 0.75 to 5.0 wt%, most especially 1.0 to 4.0 wt%.

It will be appreciated that as the hydrocarbon resin is preferably unreactive it can form part of either component in the kit used to form the intumescent coating composition.

### Flame retardant

The binder system may also comprise at least one flame retardant such as a phosphorus containing flame retardant. Suitable flame retardants include phosphoric acid, phosphite, phosphonate and phosphoric acid esters.

The use of triarylphosphate esters, especially triphenyl phosphate esters are preferred. Where a flame retardant is used this must be different and hence separate from any other component of the intumescent coating.

Preferably the flame retardant forms from 2.0 to 10 wt% of the coating, preferably 2.5 to 10% by weight, e.g. 2.5 to 8.0 wt%, especially 3.0 to 8.0 wt%.

### Additives that do not form part of the binder system

The intumescent coating composition may also contain various other components. In particular, the intumescent coating composition may comprise additives selected from pigments, fillers, and rheology modifiers. The use of fibrous fillers is especially preferred. The fibers useful in the intumescent coating composition of the present invention include, but are not limited to, inorganic fibers and organic fibers. Typical inorganic fibers include: carbide fibers, such as boron carbide fibers, silicon carbide fibers, niobium carbide fibers, etc.; nitride fibers, such as silicon nitride fibers; boron containing fibers, such as boron fibers, boride fibers; silicon containing fibers, such as silicon fibers, alumina-boron silica fibers, E-glass (non-base aluminum borates) fibers, C-glass (non-base or low base sodalime-aluminumborosilicate) fibers, A-glass (base -sodalime-silicate) fibers, S-glass fibers, inorganic glass fibers, quartz fibers, etc. The glass fibers may include E-glass fibers, C-glass fibers, A-glass fibers, S-glass fibers, etc.

Useful inorganic fibers also include ceramic fibers and basalt fibers. Kevlar (para-aramid fibres) may also be used.

A preferred organic fibre is carbon fibres.

Other suitable fillers include titanium dioxide, zinc oxide, aluminium oxide, carbonates, borates, silica, silicates, heavy metal oxides such as cerium oxide, lanthanum oxide and zirconium oxide, mica, diatomaceous earth and bentonite clay. A preferred filler is titanium dioxide.

The fillers preferably constitutes from 1% to 25% by weight of the intumescent coating composition.

Further optional additives may be included to aid char formation and to strengthen the char and prevent char degradation. Such additives include solids such as zinc borate, zinc stannate, zinc hydroxystannate, glass flake, glass spheres, polymeric spheres, fibres (ceramic, mineral, glass/silica based), aluminium hydroxide oxide, boron phosphate, fumed silica.

Examples of the color pigments include titanium white, red iron oxide, yellow iron oxide, black iron oxide, carbon black and organic color pigments.

Other ingredients include rheology modifiers (anti-sagging/anti-settling agent), plasticizer, inorganic or organic dehydrator (stabilizer), defoaming agent and dispersing agents. The use of defoamers and dispersing agents is especially preferred.

As the rheology modifier, a thixotropic agent, such as polyamide wax, polyethylene wax, fumed silica or a bentonite-based thixotropic agent, may be employed. Examples of such anti-sagging/anti-settling agents include Cryvallac Ultra, Crayvallac LV, both from Arkema, Thixatrol ST and Thixatrol Max, both from Elementis, Disparlon 6650 from Kusumoto Chemicals Ltd.

It may also be possible to include anticorrosive components in the coating composition. Such components may be metal oxides, metal carbonates, talc, feldspar and so on to act as anti-corrosive materials. Specific anticorrosive functional pigments include zinc phosphate, zinc oxide, zinc dust, aluminium flakes, lead oxide. Auxiliary corrosion inhibitors, for example a molybdate, phosphate, tungstate or vanadate, ultrafine titanium dioxide, and/or zinc oxide and/or a filler such as silica, calcined clay, alumina silicate, talc, barytes or mica

The total amount of the above-mentioned various additive components depend upon the use and cannot be determined indiscriminately, but they are frequently contained in the total amount of 5.0 to 65% by weight in the intumescent coating composition, such as 5.0 to 50 wt%, preferably 5.0 to 30 wt%.

Suitable solvents, if present, are hydrocarbons such as xylene. Solvent, if present, is preferably added to the first composition (A) used to make the coating composition. Some solvent might also be present with the curing agent or in some of the additives used. The nature of the solvent is not restricted, and publicly known solvents having boiling points of wide range are employable. Examples of such solvents include xylene, toluene, MIBK, methoxypropanol, MEK, butyl acetate, benzyl alcohol, octyl phenol, resorcinol, n-butanol, isobutanol and isopropanol. The above solvents can be used singly or in combination of two or more kinds.

It is preferred however if no solvent is present at all.

If solvent is present then the percentages above of components in the intumescent coating of the invention should be determined in dry weight terms, ignoring the weight of solvent.

### Preparation of the Intumescent Coating Composition

The intumescent coating composition may be prepared by any suitable technique that is commonly used within the field of paint production. Thus, the various constituents may be mixed together using a high speed disperser, a ball mill, a pearl mill, a three-roll mill, an inline mixer etc.

Conveniently the intumescent coating composition is supplied as a kit of parts. Part (A) comprises the epoxy resin and part (B) the curing agent. Non-reactive components such as the hydrocarbon resin, additives such as fillers and pigments and the intumescent components can be supplied in either part (A) or (B). The reactive diluent is conveniently added to part (A) as it reacts with the curing agent. The silane can be in either part (A) or part (B) depending on its functionality. If it would react with the curing agent then it should be in part (A). If it would react with the binder then it would be added in part (B). The skilled person will be able to design an appropriate kit to supply the components for transport.

It will be appreciated that the relative amounts of each component within any part of the kit will be determined by the final wt% values in the intumescent coating composition and the relative mixing ratios.

The intumescent coating compositions to be used herein are conveniently prepared by mixing the components. As an example, the first composition (A) and the curing agent component (B) (the second composition) can be mixed by adding the curing agent to the epoxy first composition and stirring well until the mixture is homogeneous. The mixture is immediately ready for application, e.g. by spray application or manually, but may also be given an induction time prior to application. Alternative spray equipment, designed specifically for the application of two component, highly viscous paints will not require pre-mixing of the two components. The two components would then be mixed mechanically just prior to the paint reaching the application gun allowing convenient application of the composition.

### Application of the Intumescent Coating Composition

The intumescent coating composition can be applied to a substrate (in particular a steel structure) by spray using well-known, specialised, 2 component airless spray pumps or manually, using, for example, a trowel. Pre heating of the product up to 60 °C and pressures such as 3 to 6 bars may be required.

When applying the intumescent coating composition, it is possible to incorporate a mesh or scrim which is embedded within the intumescent coating. The mesh, or scrim is typically comprised of one, or a combination, of; glass, carbon, basalt, or some other high temperature resistant fibre based material. These can also comprise or be combined with a fine metal wire, for example carbon or stainless steel. This mesh is commonly used in the system to provide an element of reinforcement or control of the intumescent foam as it forms during the intumescent reaction. It is preferred if the intumescent coating composition of the present invention does not contain a mesh or scrim.

### Film Thickness

The intumescent coating compositions is applied in high dry film thickness to ensure a good fire protection. The applied film thickness might vary depending on the nature of substrate being coated and its predicted fire exposure scenario.The dry film thickness of the intumescent coating composition is preferably 0.5 - 40 mm. The intumescent coating composition may be applied in several layers to achieve the appropriate dry film thickness.

### Curing

Once a substrate is coated with the coating, the coating must be cured. The intumescent coating composition may cure spontaneously. Whilst heat may be used to encourage curing, the compositions of the invention cure at ambient temperature without further intervention.

It is possible to apply a subsequent coat whilst the intumescent coating composition is "wet". There is no requirement therefore to wait for the first coating to cure before applying a further coating. In order to build-up layer thickness, it is known to apply multiple layers of the intumescent coating composition but conventionally, each layer is cured (dried) before a further layer is applied. In the present invention, application of further layers can be carried out on a wet (or uncured) underlayer. This speeds up the application process.

In a further aspect, therefore the invention includes a process in which further coats of the intumescent coating composition are applied to an undercoat of the intumescent coating composition without an intermediate curing step.

Alternatively viewed, the invention includes a process in which further coats of the intumescent coating composition are applied to an undercoat of the intumescent coating composition before the undercoat has cured.

In a further aspect the invention includes a process in which coats of the intumescent coating composition are applied to an undercoat of a primer composition.

In a particularly preferred embodiment, the invention provides an intumescent coating composition comprising:
(i) 10 to 30 wt% of at least one epoxy binder;
(ii) 0.5 to 10 wt% of at least one silane;
(iii) 0 to 8.0 wt%, such as 0.5 to 8.0 wt%, of at least one hydrocarbon resin;
(iv) 0 to 20 wt%, such as 0.5 to 10 wt%, at least one reactive diluent; and
(v) at least one curing agent;
(vi) 12 to 40 wt% an acid-generating compound;
(vii) 1.0 to 8.0 wt% an expansion agent; and
(viii) 5.0 to 16 wt% a carbon donor compound.

In a particularly preferred embodiment, the invention provides an intumescent coating composition comprising:
(i) 16 to 25 wt% of at least one epoxy binder;
(ii) 1.0 to 5.0 wt% of at least one silane;
(iii) 0 to 4.0 wt%, such as 1.0 to 4.0 wt%, of at least one hydrocarbon resin;
(iv) 0 to 5.0 wt%, such as 1.0 to 5.0 wt%, at least one reactive diluent; and
(v) at least one curing agent;
(vi) 15 to 30 wt% an acid-generating compound;
(vii) 1.0 to 5.0 wt% an expansion agent; and
(viii) 7 to 14 wt% a carbon donor compound.

The invention will now be described with reference to the following nonlimiting examples.

### Analytical methods

### General procedure for preparation of the compositions

Components of the intumescent coating were mixed on a high-speed dissolver in the indicated parts by weight. The resins were added first and blended at low speed. Then the intumescent pigments and fillers were added and mixed at a high speed until no lumps could be seen. Component A and B were prepared separately. Component A comprises the epoxy-based binder, reactive diluent and flame retardant. Component B comprises the curing agent. The silane, hydrocarbon resin, intumescent components, pigments and fillers and additives were present in either component A or component B or both.

The total amount of each component in the coating composition after mixing of component A and B is listed in the table below.

### Toughness Test/T-bar test

Before application, the component A and component B were weighed out according to the mixing ratio and mixed together with a handheld double-bladed mixer. The mixing ratio was such that the ratio between the hydrogen equivalents of the totality of the curing agents and the totality of epoxy equivalents in the epoxy-based binder system was kept at 100: 100. The material was then applied onto the sample specimens by hand. The sample specimens had been blasted to Sa 2 ½ (SSPC SP10) and primed with Muki EPS from Jotun to a DFT of approximately 30µm.

The intumescent coatings were applied onto a T-shaped steel specimen; a 150x200x10 mm base plate with a 200x100x10 mm "T" sticking up. One side of the T was applied to approximately 7 mm and the other side was applied to approximately 16 mm. The samples were left to cure in room temperature for two days. At the third day, cyclic testing of the samples started. The samples were moved to a programmable temperature chamber and exposed to 60 °C for 12 hours, immediately followed by -20 °C for 12 hours, thus making one cycle 24 hours. Total duration was 6 weeks, equivalent to 42 cycles. The samples were inspected every day and number of days before first crack was reported.

### Fire test

### Application

The test samples were prepared and tested in Jotun's internal test facilities, using 0.5 m tall 254x254x73 columns with a Hp/A of approximately 160. The coating prepared using the present invention was applied to 10 mm DFT.

### Fire testing

The prepared samples were conditioned for two weeks prior to fire testing. The test was be conducted using the hydrocarbon heating curve as defined within the Department of Energy Test Specification - issue 1: Jan 1990 and using procedures from BS476: Part 20: 1987 and BS 476: Part 21: 1987

Furnace temperature was measured and controlled using four bare wire type K chromel-alumel thermocouples located within the furnace and positioned close to each test specimen, as per internal testing procedures. Furnace pressure was continually monitored by a micro-meter and maintained at approximately 10Pa for the test duration.

Steel substrate temperatures of the test samples was monitored by at least 6 type K chromel-alumel thermocouples drilled into the centre of the steel, as per Yellow Book rev5 directions.The fire test was conducted until the average steel substrate temperatures of the test samples had reached a set failure temperature. In this case the critical core temperature was set to 400 °C, and the time to reach this temperature was recorded in minutes.

### Examples

The following materials are used:

| **Materials** | **Details** | **Properties** |
|---|---|---|
| | | EEW = Epoxy Equivalent Weight |
| | | AHEW = Amine Hydrogen Equivalent Weight |
| | | AEW = Acrylate Equivalent Weight |
| Bis A epoxy | Binder | EEW = 182 - 192 g/eq |
| | | Viscosity = 11000 - 14000 mPa·s |
| Bis F epoxy | Binder | EEW = 164 - 175 g/eq |
| | | Viscosity = 2000 - 4500 mPa·s |
| Epoxy functional silane | (Gamma-Glycidoxypropyl)trimethoxysilane, Silquest A-187 from Momentive | EEW = 236 |
| | | Viscosity = 3.6 mPa·s s |
| Aminofunctional silane | 3-aminopropyltriethoxysilane, Dynasylan AMEO from Evonik | Viscosity = 1. 85 mPa·s |
| Reactive diluent (epoxy functional) | Difunctional, based on 1,6-hexanediol diglycidyl ether, D.E.R 734 from Dow Corning | EEW = 140 - 160 g/eq |
| | | Viscosity = 10 - 30 mPa·s s |
| Reactive diluent (acrylate functional) | Trimethylolpropane triacrylate (TPTA), Sartomer SR 351 from Sartomer | AEW = 95 g/eq |
| | | Viscosity = 80 - 130 mPa·s |
| Hydrocarbon resin 1 | Phenol modified Hydrocarbon resin, Novares LC 15 from Rütgers | Viscosity = 100 - 180 mPa·s s |
| | | OH content = 1,4 - 1,8 % |
| Hydrocarbon resin 2 | Xylene formaldehyde hydrocarbon resin, Epodil LV5 from Evonik | Viscosity = 30 - 70 mPa·s s |
| Flame retardant | Triphenyl phosphate ester | Viscosity = 65 - 90 mPa·s s |
| Curing agent 1 | Modified polyamine | AHEW = 95 g/eq |
| | | Viscosity = 350 - 650 mPa·s s |
| Curing agent 2 | Modified polyamine | AHEW = 95 g/eq |
| | | Viscosity = 100 - 200 mPa·s s |
| Ammonium polyphosphate | Acid catalyst for intumescent reaction | |
| Melamine | Blowing agent for intumescent reaction | |
| Mono-pentaerythritol | Carbon source for intumescent reaction | |
| Defoamer | BYK-052 N from BYK | |
| Dispersing agent | Acrylate co-polymer (DISPERBYK-2070 from BYK) | |

### Examples

The following compositions were prepared:

| **Binder system** | **Ex.1** | **Ex.2** | **Ex.3** | **Ex.4** | **Ex.5** | **Ex.6** | **Comp. Ex. 1** | |
|---|---|---|---|---|---|---|---|---|
| Bis A epoxy | | 18.11 | 20.51 | 17.56 | 23.26 | 23.45 | 26.74 | |
| Bis F epoxy | 18.84 | | | | | | | |
| Epoxy functional silane | 3.62 | 3.62 | | 3.51 | 2.11 | 3.61 | | |
| Amino functional silane | | | 2.91 | | | | | |
| Reactive diluent (epoxy functional) | 3.62 | 3.62 | 4.10 | | | | | |
| Reactive diluent (acrylate functional) | | | | 3.51 | | | | |
| Hydrocarbon resin 1 | 1.87 | 1.81 | | 1.93 | | | | |
| Hydrocarbon resin 2 | | | 1.46 | | 2.82 | | | |
| Flame retardant | 5.09 | 7.11 | 8.06 | 6.90 | 6.82 | 7.09 | 7.23 | |
| Curing agent 1 | 14.34 | 12.77 | | 13.70 | | 13.12 | 13.38 | |
| Curing agent 2 | | | 10.34 | | 12.46 | | | |

| **Intumescent components** | | | | | | | | |
|---|---|---|---|---|---|---|---|---|
| Ammonium polyphosphate | 21.29 | 21.35 | 21.22 | 21.33 | 21.18 | 21.27 | 21.23 | |
| Melamine | 2.96 | 2.96 | 2.94 | 2.96 | 2.94 | 2.95 | 2.95 | |
| Mono-pentaerythritol | 10.96 | 10.99 | 10.92 | 10.98 | 10.90 | 10.95 | 10.93 | |

| **Pigments and fillers** | | | | | | | | |
|---|---|---|---|---|---|---|---|---|
| Pigments and fillers (total) | 17.32 | 17.53 | 17.42 | 17.53 | 17.41 | 17.47 | 17.46 | |

| **Additives** | | | | | | | | |
|---|---|---|---|---|---|---|---|---|
| Defoamer | 0.01 | 0.01 | 0.01 | 0.01 | 0.01 | 0.01 | 0.01 | |
| Dispersing agent | 0.07 | 0.07 | 0.07 | 0.07 | 0.07 | 0.07 | 0.07 | |

| **Results:** | | | | | | | | |
|---|---|---|---|---|---|---|---|---|
| T-bar testing, days before 1st crack | 28 | 23 | 21 | 15 | 17 | 17 | 2 | |
| Fire testing, critical core temperature 400 °C, min | 53 | 50 | 49 | 55 | 52 | 56 | 51 | |

Example 6 shows that by adding an epoxy-functional silane to the epoxy-amine binder system in comparative example 1 the T-bar results are significantly improved.

Comparative example 1 and example 2 are directly comparable and show that the T-bar results are further improved when are active diluent and a hydrocarbon resin are added to the epoxy-amine binder system in addition to the epoxy-functional silane.

In example 1, a bisphenol F epoxy-binder is used. In example 2, a bisphenol A epoxy-binder is used. This shows that both bisphenol A and F work in the invention.

Example 5 shows that the reactive diluent is not essential for the invention. Good T-bar results are obtained without the reactive diluent.

Example 4 shows that good T-bar results is obtained using an acrylate-functional diluent instead of the epoxy-reactive diluent.

Example 3 shows that an amine-functional silane also works in the invention.

The largest improvement in toughness though is achieved using the combination of silane, the hydrocarbon resin and ideally the reactive diluent.

## Claims

1. An intumescent coating composition comprising:
(i) at least one epoxy binder;
(ii) at least one support free silane; and
(iii) at least one curing agent.

2. An intumescent coating composition comprising:
(i) at least one epoxy binder;
(ii) at least one silane;
(iii) at least one curing agent.
(iv) at least one hydrocarbon resin; and/or
(v) at least one reactive diluent.

3. An intumescent coating composition comprising:
(i) 5.0 to 60 wt% of at least one epoxy binder;
(ii) 0.1 to 15 wt% of at least one support free silane;
(iii) 0 to 20 wt% of at least one hydrocarbon resin;
(iv) 0 to 15 wt% at least one reactive diluent; and
(v) at least one curing agent.

4. An intumescent coating composition comprising:
(i) 5.0 to 60 wt% of at least one epoxy binder;
(ii) 0.1 to 15 wt% of at least one support free silane;
(iii) 0 to 20 wt% of at least one hydrocarbon resin;
(iv) 0 to 15 wt% of at least one reactive diluent;
(v) at least one curing agent;
(vi) 10 to 50 wt% of an acid-generating compound;
(vii) 0.5 to 10 wt% of an expansion agent; and
(viii) 0 to 20 wt% of a carbon donor compound.

5. An intumescent coating composition as claimed in any preceding claim further comprising an acid-generating compound;
an expansion agent;
optionally a carbon donor compound; and optionally
at least one flame retardant.

6. An intumescent coating composition as claimed in any preceding claim wherein the silane is of general formula (I) or (II)
(I) Y-R_{(4-z)}SiX_{z}
wherein z is an integer from 1 to 3,
(II) Y-R_{(3-y)}R¹SiX_{y}
wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents a halogen group or an alkoxy group.
Y is a functional group bound to R selected from amino, epoxy, acryl, methacryl, carboxyl, hydroxyl, thiol or isocyanate groups, preferably an amine or epoxy group.

7. An intumescent coating composition as claimed in any preceding claim wherein the hydrocarbon resin forms 0.5 to 20 wt% of the composition, especially 1.0 to 4.0 wt%; and/or
an intumescent coating composition as claimed in any preceding claim wherein the reactive diluent forms 0.5 to 10 wt% of the composition, especially 1.0 to 5.0 wt%.

8. An intumescent coating composition as claimed in any preceding claim wherein the silane forms 0.25 to 10 wt% of the coating composition, especially 0.5 to 10 wt%, such as 1.0 to 5.0 wt%.

9. An intumescent coating composition as claimed in any preceding claim wherein the reactive diluent is an aliphatic epoxy functional or aliphatic (meth)acrylic functional reactive diluent such as 1,6-hexanediol diglycidyl ether or 1,4-butanediol diglycidyl ether.

10. An intumescent coating composition as claimed in any preceding claim wherein coating composition has a solids content of at least 95%.

11. An intumescent coating composition as claimed in any preceding claim wherein the curing agent is an amino functional curing agent such as a amine functional polyamide or a polyamine curing agent.

12. An intumescent coating composition as claimed in any preceding claim wherein the hydrocarbon resin comprises C and H atoms only or C, H and 0-10 wt% of O atoms such as hydroxyl group containing aromatic petroleum resin or a xylene formaldehyde resin.

13. A kit of parts suitable for the formation of an intumescent coating composition comprising:
a component (A) comprising at least one epoxy binder; and
a component (B) comprising at least one curing agent;
wherein at least one silane is present in component (A) or (B).

14. A substrate coated with an intumescent coating composition as claimed in any preceding claim which has been cured.

15. A process for the application of an intumescent coating composition to a substrate comprising applying an intumescent coating composition as claimed in any of claims 1 to 12 to a primer layer on a substrate or directly to a metallic substrate, e.g. by airless spraying and allowing said coating system to cure.

16. A coating system comprising:
(I) a primer layer;
(II) an intumescent layer comprising an intumescent coating composition as claimed in claim 1 to 12 which has been cured;
(III) optionally a top coat layer; or
(I) an intumescent layer comprising an intumescent coating composition as claimed in claim 1 to 12 which has been cured;
(II) optionally a top coat layer.

17. Use of:
(i) at least one epoxy binder;
(ii) at least one silane, such as a support free silane; and
(iii) at least one curing agent;
preferably in combination with a reactive diluent and/or an hydrocarbon resin to increase the toughness of an intumescent coating comprising the same.
